# EUROPEAN PATENT SPECIFICATION

(11) **EP 3 819 171 B1**
(45) Date of publication and mention of the grant of the patent: **25.06.2025**
(21) Application number: 18925373.5
(22) Date of filing: 04.07.2018
(51) Int. Cl.: G08B 21/02, B60N 2/00, B60R 21/015, G08B 21/22, G08B 21/24, G08B 29/18, B60N 2/26, G10L 17/00

(54) **NOTIFICATION TARGET DETECTION DEVICE, ALARM SYSTEM, AND NOTIFICATION TARGET DETECTION METHOD**
VORRICHTUNG ZUR BENACHRICHTIGUNGSZIELDETEKTION, ALARMSYSTEM UND VERFAHREN ZUR BENACHRICHTIGUNGSZIELDETEKTION
DISPOSITIF DE DÉTECTION DE CIBLE DE NOTIFICATION, SYSTÈME D'ALARME ET PROCÉDÉ DE DÉTECTION DE CIBLE DE NOTIFICATION

(43) Date of publication of application: 12.05.2021
(73) Proprietor: Mitsubishi Electric Corporation, Tokyo 100-8310 (JP)
(72) Inventor: OGAWA, Yoshiyuki, Tokyo 100-8310 (JP); KUMAGAI, Taro, Tokyo 100-8310 (JP)
(74) Representative: Plasseraud IP
(86) International application number: PCT/JP2018/025374
(87) International publication number: WO 2020/008568

(56) References cited:
- WO-A1-2013/111745
- JP-A- 2001 301 575
- JP-A- 2002 063 668
- JP-A- 2008 296 777
- JP-A- 2016 149 105
- JP-A- 2017 007 453
- US-A1- 2015 158 426
- US-A1- 2017 132 894
- US-B1- 9 845 050

## Description

### TECHNICAL FIELD

The invention relates to a notification target detection device that detects a child or a pet that cannot get out of a vehicle by himself or herself when he or she is left alone in a vehicle's interior, as a target of which a person outside the vehicle is to be informed (hereinafter, referred to as a notification target).

### BACKGROUND ART

Conventionally, there has been used proposed a technique for detecting a child or a pet that cannot get out of a vehicle by himself or herself when he or she is left alone in a vehicle's interior, and informing a person outside the vehicle of presence. For example, Patent Literature 1 discloses a device that detects a child left alone in a vehicle's interior by using an infrared sensor, a pressure-sensitive sensor, a weight sensor, and an in-vehicle camera installed in the vehicle's interior. Patent literature 2 and 3 address the problem of detecting occupants in the parked vehicle by utilizing cameras, microphones and infrared sensors.

### CITATION LIST

### PATENT LITERATURE

Patent Literature 1: JP 2006-159939 A
Patent Literature 2: JP 2016 149105 A
Patent Literature 3: WO2013 133 075A1

### SUMMARY OF INVENTION

### TECHNICAL PROBLEM

The device described in Patent Literature 1 has a problem that when a child is hidden at a location outside detection areas of the sensors or an image-capturing area of the in-vehicle camera in the vehicle's interior, the child cannot be detected even if he or she is left alone in the vehicle's interior.

The present invention is to solve the above-described problem, and an object of the present invention is to obtain a notification target detection device that can reduce failure to detect a notification target which is a child or a pet that cannot get out of a vehicle by himself or herself when he or she is left alone in a vehicle's interior.

### SOLUTION TO PROBLEM

The invention provides notification target detection devices according to claims 1, 4 and a notification target detection method according to claim 8. Preferable aspects are set forth in the dependent claims.

### ADVANTAGEOUS EFFECTS OF INVENTION

According to the present invention, the notification target detection device determines whether a source of generation of a voice in the vehicle's interior is a target of which a person outside the vehicle is to be informed, when vehicle speed is less than or equal to the threshold value or a shifter position is the park position and a passenger is not present in the vehicle's interior. As a result, even when it is determined that a passenger is not present in the vehicle's interior because a notification target is present at a location outside an image-capturing area of an in-vehicle camera, the notification target can be detected from the voice in the vehicle's interior. Thus, failure to detect the notification target which is a child or a pet left alone in the vehicle's interior can be reduced.

### BRIEF DESCRIPTION OF DRAWINGS

FIG. 1 is a block diagram showing a functional configuration of an alarm system according to a first embodiment of the invention.
FIG. 2A is a block diagram showing a hardware configuration that implements functions of a notification target detection device according to the first embodiment, and FIG. 2B is a block diagram showing a hardware configuration that executes software that implements the functions of the notification target detection device according to the first embodiment.
FIG. 3 is a flowchart showing a notification target detection method according to the first embodiment.
FIG. 4 is a flowchart showing an example of an alarm process of the first embodiment.
FIG. 5 is a block diagram showing a functional configuration of an alarm system according to a second embodiment of the invention.
FIG. 6 is a flowchart showing a notification target detection method according to the second embodiment.
FIG. 7 is a block diagram showing a functional configuration of an alarm system according to a third embodiment of the invention.
FIG. 8 is a flowchart showing a notification target detection method according to the third embodiment.
FIG. 9 is a block diagram showing a functional configuration of an alarm system according to a fourth embodiment of the invention.
FIG. 10 is a flowchart showing a notification target detection method according to the fourth embodiment.

### DESCRIPTION OF EMBODIMENTS

To describe the present invention in more detail, embodiments for carrying out the present invention will be described below by referring to the accompanying drawings.

### First Embodiment.

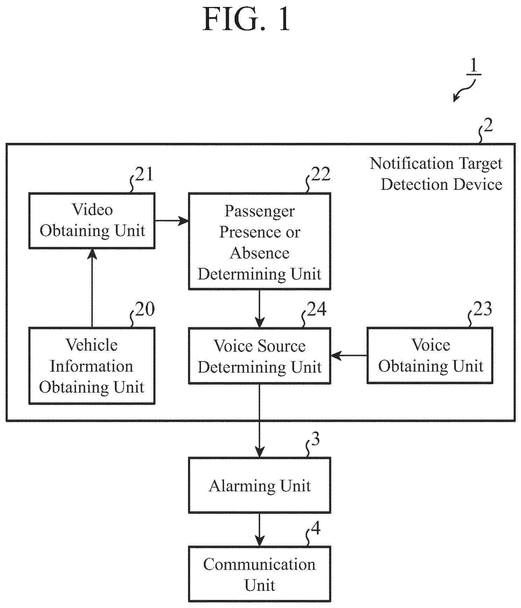

FIG. 1 is a block diagram showing a functional configuration of an alarm system 1 according to a first embodiment of the invention. The alarm system 1 is a system that performs an alarm process for detecting a notification target left alone in a vehicle's interior and informing a person outside a vehicle of the detection of the notification target, and includes a notification target detection device 2, an alarming unit 3, and a communication unit 4. Here, the notification target is a passenger who cannot get out of the vehicle by himself or herself when he or she is left alone in the vehicle's interior and includes, for example, a child (baby) or a pet.

A child or a pet that is still present in the vehicle's interior when the vehicle is parked is highly likely to be left alone in the vehicle's interior. Hence, the notification target detection device 2 detects, as a notification target, a child or a pet present in the vehicle's interior when the vehicle is parked. The notification target detection device 2 notifies the alarming unit 3 of the detection of the notification target present in the vehicle's interior.

When the alarming unit 3 receives the notification indicating the detection of the notification target from the notification target detection device 2, the alarming unit 3 outputs an alarm to an area around the vehicle. For example, the alarming unit 3 outputs an alarm sound or a voice message from a speaker installed in the vehicle. In addition, the alarming unit 3 may flash headlights and taillights of the vehicle.

The communication unit 4 communicates with an external device. For example, the communication unit 4 transmits alarm information indicating that the notification target has been left alone in the vehicle's interior to the external device. The external device is, for example, a portable terminal carried by a passenger who has got out of the vehicle.

The notification target detection device 2 includes a vehicle information obtaining unit 20, a video obtaining unit 21, a passenger presence-or-absence determining unit 22, a voice obtaining unit 23, and a voice source determining unit 24. The vehicle information obtaining unit 20 obtains vehicle information indicating vehicle speed or a shifter position. For example, the vehicle information obtaining unit 20 obtains vehicle information about vehicle speed from a vehicle speed sensor installed in the vehicle, and obtains vehicle information about a shifter position from an electronic control unit for in-vehicle use (hereinafter, referred to as ECU for in-vehicle use).

In addition, the vehicle information obtaining unit 20 determines whether the vehicle speed is less than or equal to a threshold value or whether the shifter position is a park position, on the basis of the vehicle information. The above-described threshold value is vehicle speed indicating that the vehicle is parked, and for example, 0 (km/h) is set. Note, however, that taking into account a case of moving the vehicle to a parking location by self-driving after a passenger gets out of the vehicle, a vehicle speed of, for example, about 5 (km/h) may be set as the threshold value.

The video obtaining unit 21 obtains video in which the vehicle's interior is shot. For example, the video obtaining unit 21 obtains video from an in-vehicle camera installed in the vehicle. Note that the video obtained by the video obtaining unit 21 is video shot by the in-vehicle camera from an angle that shows all seats in the vehicle's interior. As the in-vehicle camera, a camera included in a driver monitoring system (hereinafter, referred to as DMS) may be used.

The passenger presence-or-absence determining unit 22 determines whether a passenger is shown in the video of the vehicle's interior obtained by the video obtaining unit 21. For example, since the video obtained by the video obtaining unit 21 shows all seats in the vehicle's interior, if the video shows even a single seat in which a passenger sits among the seats in the video, then the passenger presence-or-absence determining unit 22 determines that a passenger is present. In addition, if a seat in which a passenger sits is not shown in the video, then the passenger presence-or-absence determining unit 22 determines that there is no passenger in the vehicle's interior.

The voice obtaining unit 23 obtains a voice in the vehicle's interior. For example, the voice obtaining unit 23 obtains a voice picked up by a microphone provided in the vehicle's interior. Note that to obtain all voices generated in the vehicle's interior, a microphone may be disposed in each seat in the vehicle's interior, and a plurality of microphones may be arranged in rear seats. Voice information obtained by the voice obtaining unit 23 is outputted to the voice source determining unit 24.

The voice source determining unit 24 determines whether a source of generation of the voice in the vehicle's interior obtained by the voice obtaining unit 23 is a notification target. For example, voice characteristics data representing the characteristics of a voice of the notification target is set in the voice source determining unit 24. The voice source determining unit 24 analyzes characteristics of the voice obtained by the voice obtaining unit 23, and refers to the above-described voice characteristics data on the basis of the characteristics of the voice, and thereby determines a source of generation of the voice.

In addition, the voice source determining unit 24 determines whether the source of generation of the voice in the vehicle's interior is the notification target, when it has been determined, on the basis of the vehicle information obtained by the vehicle information obtaining unit 20, that the vehicle speed is less than or equal to the threshold value or the shifter position is the park position and the passenger presence-or-absence determining unit 22 has determined that a passenger is not shown in the video of the vehicle's interior.

As such, when the passenger presence-or-absence determining unit 22 determines that a passenger is not shown in the video, i.e., there is no passenger in the vehicle's interior, the voice source determining unit 24 determines whether the source of generation of the voice in the vehicle's interior is the notification target to confirm a result of the determination. As a result, for example, even when the passenger presence-or-absence determining unit 22 makes an erroneous determination because the notification target is present at a location outside a shooting area of the in-vehicle camera, the notification target detection device 2 can detect the notification target from the voice in the vehicle's interior.

Next, a hardware configuration that implements functions of the notification target detection device 2 will be described.

Functions of the vehicle information obtaining unit 20, the video obtaining unit 21, the passenger presence-or-absence determining unit 22, the voice obtaining unit 23, and the voice source determining unit 24 in the notification target detection device 2 are implemented by a processing circuit.

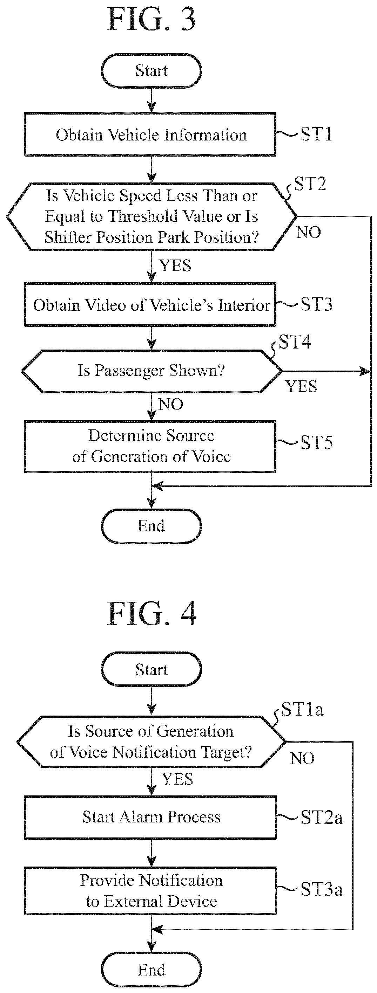

Namely, the notification target detection device 2 includes a processing circuit for performing processes at step ST1 to ST5 which will be described later using FIG. 3. The processing circuit may be dedicated hardware or may be a central processing unit (CPU) that executes programs stored in a memory.

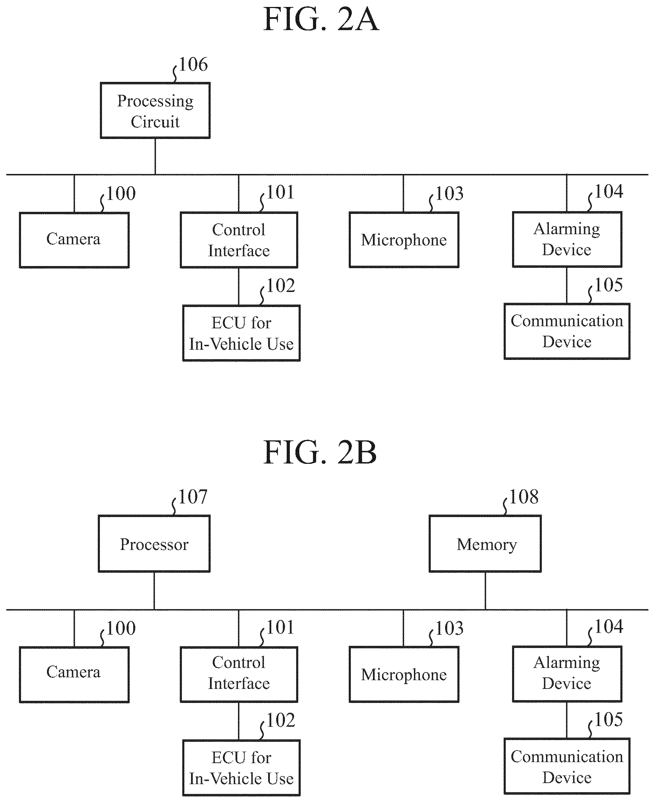

FIG. 2A is a block diagram showing a hardware configuration that implements the functions of the notification target detection device 2. FIG. 2B is a block diagram showing a hardware configuration that executes software that implements the functions of the notification target detection device 2. In FIGS. 2A and 2B, a camera 100 is an in-vehicle camera installed in the vehicle, and the video obtaining unit 21 shown in FIG. 1 obtains video of the vehicle's interior shot by the camera 100.

A control interface 101 is an interface that relays vehicle information outputted from an ECU for in-vehicle use 102. The vehicle information obtaining unit 20 shown in FIG. 1 obtains vehicle information from the ECU for in-vehicle use 102 through the control interface 101. A microphone 103 is a microphone provided in the vehicle's interior. The voice obtaining unit 23 shown in FIG. 1 obtains a voice picked up by the microphone 103. An alarming device 104 is the alarming unit 3 shown in FIG. 1, and a communication device 105 is the communication unit 4 shown in FIG. 1.

When the processing circuit is a processing circuit 106 which is dedicated hardware shown in FIG. 2A, the processing circuit 106 corresponds, for example, to a single circuit, a combined circuit, a programmed processor, a parallel programmed processor, an application specific integrated circuit (ASIC), a field-programmable gate array (FPGA), or a combination thereof. The functions of the vehicle information obtaining unit 20, the video obtaining unit 21, the passenger presence-or-absence determining unit 22, the voice obtaining unit 23, and the voice source determining unit 24 in the notification target detection device 2 may be implemented by different processing circuits, or the functions may be collectively implemented by a single processing circuit.

When the processing circuit is a processor 107 shown in FIG. 2B, the functions of the vehicle information obtaining unit 20, the video obtaining unit 21, the passenger presence-or-absence determining unit 22, the voice obtaining unit 23, and the voice source determining unit 24 in the notification target detection device 2 are implemented by software, firmware, or a combination of software and firmware. Note that the software or firmware is described as programs and stored in a memory 108.

The processor 107 implements the functions of the vehicle information obtaining unit 20, the video obtaining unit 21, the passenger presence-or-absence determining unit 22, the voice obtaining unit 23, and the voice source determining unit 24 in the notification target detection device 2 by reading and executing the programs stored in the memory 108. Namely, the notification target detection device 2 includes the memory 108 for storing programs, the execution of which by the processor 107 results in performing processes at step ST1 to ST5 shown in FIG. 3.

The programs cause a computer to perform a procedure or a method for the vehicle information obtaining unit 20, the video obtaining unit 21, the passenger presence-or-absence determining unit 22, the voice obtaining unit 23, and the voice source determining unit 24. The memory 108 may be a computer readable storage medium having stored therein programs for causing the computer to function as the vehicle information obtaining unit 20, the video obtaining unit 21, the passenger presence-or-absence determining unit 22, the voice obtaining unit 23, and the voice source determining unit 24.

The memory 108 corresponds, for example, to a nonvolatile or volatile semiconductor memory such as a random access memory (RAM), a read only memory (ROM), a flash memory, an erasable programmable read only memory (EPROM), or an electrically-EPROM (EEPROM), a magnetic disk, a flexible disk, an optical disc, a compact disc, a MiniDisc, or a DVD.

Some of the functions of the vehicle information obtaining unit 20, the video obtaining unit 21, the passenger presence-or-absence determining unit 22, the voice obtaining unit 23, and the voice source determining unit 24 may be implemented by dedicated hardware and some of the functions may be implemented by software or firmware. For example, the functions of the vehicle information obtaining unit 20, the video obtaining unit 21, and the voice obtaining unit 23 are implemented by the processing circuit 106 which is dedicated hardware, and the functions of the passenger presence-or-absence determining unit 22 and the voice source determining unit 24 are implemented by the processor 107 reading and executing programs stored in the memory 108. As such, the processing circuit can implement the above-described functions by hardware, software, firmware, or a combination thereof.

Next, operations will be described.

FIG. 3 is a flowchart showing a notification target detection method according to the first embodiment.

First, the vehicle information obtaining unit 20 obtains vehicle information indicating the vehicle speed or shifter position of the vehicle (step ST1). The vehicle information obtaining unit 20 determines whether the vehicle speed is less than or equal to the threshold value or whether the shifter position is the park position, on the basis of the obtained vehicle information (step ST2). In the determination, if the vehicle speed exceeds the threshold value or the shifter position is other than the park position (step ST2; NO), then the process of FIG. 3 ends.

If the vehicle speed is less than or equal to the threshold value or the shifter position is the park position (step ST2; YES), the vehicle information obtaining unit 20 notifies the video obtaining unit 21 of this fact.

When the video obtaining unit 21 receives the above-described notification from the vehicle information obtaining unit 20, the video obtaining unit 21 obtains video in which the vehicle's interior is shot (step ST3). For example, the video obtaining unit 21 obtains video of the vehicle's interior from the camera 100 shown in FIGS. 2A and 2B. The video obtained by the video obtaining unit 21 is outputted to the passenger presence-or-absence determining unit 22.

The passenger presence-or-absence determining unit 22 determines whether a passenger is shown in the video of the vehicle's interior inputted from the video obtaining unit 21 (step ST4). For example, the passenger presence-or-absence determining unit 22 determines whether a passenger is shown by performing image recognition on the video of the vehicle's interior. Determination-target passengers do not include a notification target. If a passenger is shown in the video of the vehicle's interior (step ST4; YES), it is determined that an adult stays in the vehicle's interior and thus the process of FIG. 3 ends.

If a passenger is not shown in the video of the vehicle's interior (step ST4; NO), the passenger presence-or-absence determining unit 22 notifies the voice source determining unit 24 of this fact. When the voice source determining unit 24 receives the above-described notification from the passenger presence-or-absence determining unit 22, the voice source determining unit 24 determines whether a source of generation of a voice in the vehicle's interior obtained by the voice obtaining unit 23 is a notification target (step ST5). In this manner, the voice source determining unit 24 determines whether the source of generation of the voice in the vehicle's interior is the notification target, when it has been determined, on the basis of the vehicle information obtained by the vehicle information obtaining unit 20, that the vehicle speed is less than or equal to the threshold value or the shifter position is the park position and the passenger presence-or-absence determining unit 22 has determined that a passenger is not shown in the video of the vehicle's interior.

Note that when the following conditions hold true, the operation of the voice source determining unit 24 may be temporarily stopped. For example, a first condition includes a case in which a vehicle door is opened and closed in a state in which the passenger presence-or-absence determining unit 22 has determined, when the vehicle is parked, that there is no passenger in the vehicle's interior. In this case, it is conceivable that a person who has already got out of the vehicle has got the notification target out of the vehicle, and thus, the operation of the voice source determining unit 24 is stopped. A second condition includes, for example, a case in which an operation that cannot be obviously performed by the notification target has been performed on an in-vehicle device. Operations that cannot be performed by the notification target include, for example, text input and an operation of accurately selecting a branch function. In this case, it is conceivable that a person who stays in the vehicle's interior is not the notification target but is an adult who can get out of the vehicle anytime, and thus, the operation of the voice source determining unit 24 is stopped.

A third condition includes, for example, a case in which a passenger (adult) other than the notification target is determined to be a source of generation of a voice by the voice source determining unit 24. In this case, it is determined that an adult stays in the vehicle's interior, and thus, the operation of the voice source determining unit 24 is stopped. A fourth condition includes, for example, a case in which a voice has not been obtained by the voice obtaining unit 23 within a certain period from when the vehicle is parked to when the voice source determining unit 24 operates. In this case, it is determined that a notification target that can be detected by voice is not present in the vehicle's interior, and thus, the operation of the voice source determining unit 24 is stopped. A fifth condition includes, for example, a case in which a factor that the notification target is not left alone in the vehicle's interior is set in the notification target detection device 2. For example, a passenger sets the fact that the notification target is not in the vehicle in the voice source determining unit 24. By this setting, the operation of the voice source determining unit 24 is stopped.

FIG. 4 is a flowchart showing an example of an alarm process of the first embodiment. A process at step ST1a shown in FIG. 4 is the same as the process at step ST5 shown in FIG. 3.

The voice source determining unit 24 determines whether the source of generation of the voice in the vehicle's interior obtained by the voice obtaining unit 23 is the notification target (step ST1a). In the determination, if the source of generation of the voice is only the notification target (a child, a pet, etc.), then the voice source determining unit 24 determines that the source of generation of the voice is the notification target. Namely, when a plurality of sources of generation of voices include a voice other than the notification target, e.g., an adult's voice, it is not determined that the sources of generation of voices are the notification target.

If the source of generation of the voice in the vehicle's interior is not the notification target (step ST1a; NO), then the notification target is not left alone in the vehicle's interior, and thus, the process of FIG. 4 ends.

If the source of generation of the voice in the vehicle's interior is the notification target (step ST1a; YES), then the voice source determining unit 24 notifies the alarming unit 3 of the fact that the notification target has been left alone in the vehicle's interior. When the alarming unit 3 receives the above-described notification from the voice source determining unit 24, the alarming unit 3 starts an alarm indicating that the notification target has been left alone (step ST2a). When the alarm starts, the communication unit 4 notifies an external device of the fact that the notification target has been left alone in the vehicle's interior (step ST3a). The external device is, for example, a portable terminal carried by a passenger who has got out of the vehicle.

As described above, the notification target detection device 2 according to the first embodiment determines whether a source of generation of a voice in the vehicle's interior is a notification target, when the vehicle speed is less than or equal to the threshold value or the shifter position is the park position and a passenger is not shown in video of the vehicle's interior. As a result, even when it is determined that a passenger is not shown in the video of the vehicle's interior because the notification target is present at a location outside the image-capturing area of the in-vehicle camera, the notification target can be detected from the voice in the vehicle's interior. Thus, failure to detect the notification target left alone in the vehicle's interior can be reduced.

The alarm system 1 according to the first embodiment includes the notification target detection device 2, the alarming unit 3, and the communication unit 4. Since failure to detect a notification target by the notification target detection device 2 is reduced, an alarm and notification to the external device about the fact that the notification target has been left alone can be accurately provided.

In the notification target detection method according to the first embodiment, a series of processes shown in FIG. 3 are performed, and thus, failure to detect a notification target left alone in the vehicle's interior can be reduced.

Although a case is shown in which the vehicle information obtaining unit 20 determines whether the vehicle speed is less than or equal to the threshold value or whether the shifter position is the park position, on the basis of vehicle information, the configuration is not limited thereto. For example, the voice source determining unit 24 may determine whether the vehicle speed is less than or equal to the threshold value or whether the shifter position is the park position, on the basis of vehicle information inputted from the vehicle information obtaining unit 20.

Although the passenger presence-or-absence determining unit 22 determines whether a passenger is shown in video of the vehicle's interior obtained by the video obtaining unit 21, the configuration is not limited thereto.

For example, the passenger presence-or-absence determining unit 22 may determine whether a passenger is present in the vehicle's interior, on the basis of detection information outputted from any of an infrared sensor, a pressure-sensitive sensor, and a weight sensor provided in the vehicle's interior. In this case, the video obtaining unit 21 may be omitted from the notification target detection device 2, and the voice source determining unit 24 determines whether a source of generation of a voice in the vehicle's interior is a notification target, when the vehicle speed is less than or equal to the threshold value or the shifter position is the park position and the passenger presence-or-absence determining unit 22 has determined that there is no passenger in the vehicle's interior. As a result, even when the notification target is present at a location outside a detection area of a sensor that detects the notification target in the vehicle's interior, the notification target can be determined from the voice in the vehicle's interior. Thus, failure to detect the notification target left alone in the vehicle's interior can be reduced.

In addition, the passenger presence-or-absence determining unit 22 may determine whether a passenger is shown in video of the vehicle's interior obtained by the video obtaining unit 21, and further determine whether a passenger is present in the vehicle's interior, on the basis of detection information outputted from any of an infrared sensor, a pressure-sensitive sensor, and a weight sensor provided in the vehicle's interior. In this case, too, the voice source determining unit 24 determines whether a source of generation of a voice in the vehicle's interior is a notification target, when the vehicle speed is less than or equal to the threshold value or the shifter position is the park position and the passenger presence-or-absence determining unit 22 has determined that there is no passenger in the vehicle's interior. As a result, even when the notification target is present at a location outside a detection area of a sensor that detects the notification target in the vehicle's interior, or the notification target is present at a location outside the image-capturing area of the in-vehicle camera, the notification target can be determined from the voice in the vehicle's interior. Thus, failure to detect the notification target left alone in the vehicle's interior can be reduced.

### Second Embodiment.

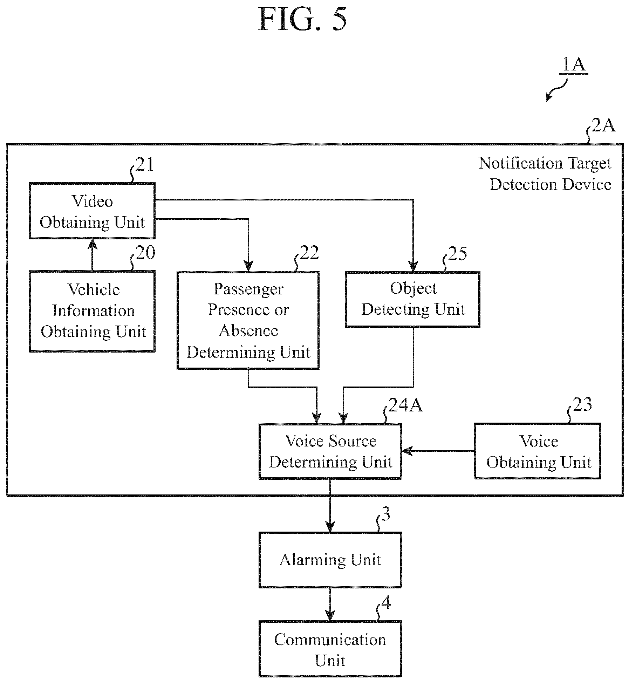

FIG. 5 is a block diagram showing a functional configuration of an alarm system 1A according to a second embodiment of the invention. In FIG. 5, the same components as those of FIG. 1 are given the same reference signs and description thereof is omitted. The alarm system 1A is a system that detects a notification target left alone in the vehicle's interior and performs an alarm process when the notification target has been detected, and includes a notification target detection device 2A, the alarming unit 3, and the communication unit 4. In addition, the notification target detection device 2A is configured to include the vehicle information obtaining unit 20, the video obtaining unit 21, the passenger presence-or-absence determining unit 22, the voice obtaining unit 23, a voice source determining unit 24A, and an object detecting unit 25.

The voice source determining unit 24A determines whether a source of generation of a voice in the vehicle's interior is a notification target, when it has been determined that the vehicle speed is less than or equal to the threshold value or the shifter position is the park position, the passenger presence-or-absence determining unit 22 has determined that a passenger is not shown in video of the vehicle's interior, and the object detecting unit 25 has detected an object concerning the notification target in the vehicle's interior. The object detecting unit 25 detects an object concerning the notification target present in the vehicle's interior on the basis of video obtained by the video obtaining unit 21.

The object concerning the notification target is an object related to the notification target in the vehicle's interior. For example, when the notification target is a child, an object concerning the child is a child seat installed in a vehicle's seat. In addition, when the notification target is a pet, an object concerning the pet is a pet carrier for keeping the pet. Note that an object concerning a notification target is used as a requirement indicating that the notification target is in the vehicle and thus does not include an object whose relationship with the notification target is unknown because the object is installed in advance in the vehicle's interior when the vehicle is shipped.

Functions of the vehicle information obtaining unit 20, the video obtaining unit 21, the passenger presence-or-absence determining unit 22, the voice obtaining unit 23, the voice source determining unit 24A, and the object detecting unit 25 in the notification target detection device 2A are implemented by a processing circuit. When the processing circuit is the processing circuit 106 which is dedicated hardware shown in FIG. 2A, the processing circuit 106 corresponds, for example, to a single circuit, a combined circuit, a programmed processor, a parallel programmed processor, an ASIC, an FPGA, or a combination thereof. The functions of the vehicle information obtaining unit 20, the video obtaining unit 21, the passenger presence-or-absence determining unit 22, the voice obtaining unit 23, the voice source determining unit 24A, and the object detecting unit 25 in the notification target detection device 2A may be implemented by different processing circuits, or the functions may be collectively implemented by a single processing circuit.

When the processing circuit is the processor 107 shown in FIG. 2B, the functions of the vehicle information obtaining unit 20, the video obtaining unit 21, the passenger presence-or-absence determining unit 22, the voice obtaining unit 23, the voice source determining unit 24A, and the object detecting unit 25 in the notification target detection device 2A are implemented by software, firmware, or a combination of software and firmware. Note that the software or firmware is described as programs and stored in the memory 108.

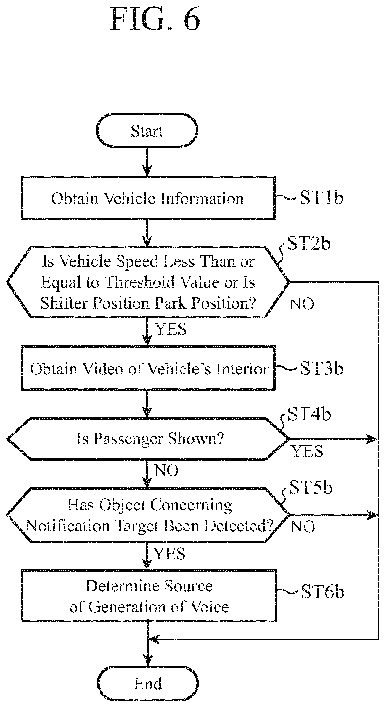

The processor 107 implements the functions of the vehicle information obtaining unit 20, the video obtaining unit 21, the passenger presence-or-absence determining unit 22, the voice obtaining unit 23, the voice source determining unit 24A, and the object detecting unit 25 in the notification target detection device 2A by reading and executing the programs stored in the memory 108. Namely, the notification target detection device 2A includes the memory 108 for storing programs, the execution of which by the processor 107 results in performing processes at step ST1b to ST6b shown in FIG. 6 which will be described later.

The programs cause a computer to perform a procedure or a method for the vehicle information obtaining unit 20, the video obtaining unit 21, the passenger presence-or-absence determining unit 22, the voice obtaining unit 23, the voice source determining unit 24A, and the object detecting unit 25. The memory 108 may be a computer readable storage medium having stored therein programs for causing the computer to function as the vehicle information obtaining unit 20, the video obtaining unit 21, the passenger presence-or-absence determining unit 22, the voice obtaining unit 23, the voice source determining unit 24A, and the object detecting unit 25.

Next, operations will be described.

FIG. 6 is a flowchart showing a notification target detection method according to the second embodiment.

Note that processes at step ST1b to ST4b shown in FIG. 6 are the same as the processes at step ST1 to ST4 shown in FIG. 3 and thus description thereof is omitted.

The object detecting unit 25 detects an object concerning a notification target on the basis of video obtained by the video obtaining unit 21 at step ST3b (step ST5b). For example, the object detecting unit 25 detects an object concerning a notification target by performing image recognition on video of the vehicle's interior.

The following description is made assuming that the notification target is a child or a pet and the object concerning the notification target is a child seat or a pet carrier.

If a child seat or a pet carrier has not been detected (step ST5b; NO), there is no child or pet which is the notification target and thus the process of FIG. 6 ends.

On the other hand, if a child seat or a pet carrier has been detected (step ST5b; YES), the object detecting unit 25 notifies the voice source determining unit 24A of this fact.

When the voice source determining unit 24A receives the above-described notification from the object detecting unit 25, the voice source determining unit 24A determines whether a source of generation of a voice in the vehicle's interior obtained by the voice obtaining unit 23 is the notification target (step ST6b). As such, the voice source determining unit 24A determines whether the source of generation of the voice in the vehicle's interior is the notification target, when it has been determined, on the basis of vehicle information obtained by the vehicle information obtaining unit 20, that the vehicle speed is less than or equal to the threshold value or the shifter position is the park position, the passenger presence-or-absence determining unit 22 has determined that a passenger is not shown in the video of the vehicle's interior, and the object detecting unit 25 has detected an object concerning the notification target.

At step ST6b, the process at step ST1a shown in FIG. 4 is performed, and the processes after step ST1a are performed depending on a result of the determination. Namely, if the source of generation of the voice in the vehicle's interior is only the notification target, then the alarming unit 3 starts an alarm indicating that the notification target has been left alone. When the alarm starts, the communication unit 4 notifies the external device of the fact that the notification target has been left alone in the vehicle's interior.

As described above, the notification target detection device 2A according to the second embodiment includes the object detecting unit 25 that detects an object concerning a notification target. The voice source determining unit 24A determines whether a source of generation of a voice in the vehicle's interior is the notification target, when it has been determined, on the basis of vehicle information obtained by the vehicle information obtaining unit 20, that the vehicle speed is less than or equal to the threshold value or the shifter position is the park position, the passenger presence-or-absence determining unit 22 has determined that a passenger is not shown in video of the vehicle's interior, and the object detecting unit 25 has detected an object concerning the notification target. As a result, even when it is determined that a passenger is not shown in the video of the vehicle's interior because the notification target is present at a location outside the image-capturing area of the in-vehicle camera, the notification target can be detected from the voice in the vehicle's interior. Particularly, in the second embodiment, since a determination as to whether the source of generation of the voice is the notification target is made when an object concerning the notification target has been detected, the accuracy of detection of the notification target improves and failure to detect the notification target can be further reduced over the configuration of the first embodiment.

The alarm system 1A according to the second embodiment includes the notification target detection device 2A, the alarming unit 3, and the communication unit 4. Since failure to detect a notification target by the notification target detection device 2A is reduced, an alarm and notification to the external device about the fact that the notification target has been left alone can be accurately provided.

In the notification target detection method according to the second embodiment, a series of processes shown in FIG. 6 are performed, and thus, failure to detect a notification target left alone in the vehicle's interior can be reduced.

Although a case is shown in which the vehicle information obtaining unit 20 determines whether the vehicle speed is less than or equal to the threshold value or whether the shifter position is the park position, on the basis of vehicle information, the configuration is not limited thereto. For example, the voice source determining unit 24A may determine whether the vehicle speed is less than or equal to the threshold value or whether the shifter position is the park position, on the basis of vehicle information inputted from the vehicle information obtaining unit 20.

Although the passenger presence-or-absence determining unit 22 determines whether a passenger is shown in video of the vehicle's interior obtained by the video obtaining unit 21, the configuration is not limited thereto.

For example, the passenger presence-or-absence determining unit 22 may determine whether a passenger is present in the vehicle's interior, on the basis of detection information outputted from any of an infrared sensor, a pressure-sensitive sensor, and a weight sensor provided in the vehicle's interior. In this case, the video obtaining unit 21 may be omitted from the notification target detection device 2A, and the voice source determining unit 24A determines whether a source of generation of a voice in the vehicle's interior is a notification target, when the vehicle speed is less than or equal to the threshold value or the shifter position is the park position, the passenger presence-or-absence determining unit 22 has determined that there is no passenger in the vehicle's interior, and an object concerning the notification target has been detected in the vehicle's interior. As a result, even when the notification target is present at a location outside a detection area of a sensor that detects the notification target in the vehicle's interior, the notification target can be determined from the voice in the vehicle's interior. Thus, failure to detect the notification target left alone in the vehicle's interior can be reduced.

In addition, the passenger presence-or-absence determining unit 22 may determine whether a passenger is shown in video of the vehicle's interior obtained by the video obtaining unit 21, and further determine whether a passenger is present in the vehicle's interior, on the basis of detection information outputted from any of an infrared sensor, a pressure-sensitive sensor, and a weight sensor provided in the vehicle's interior. In this case, too, the voice source determining unit 24A determines whether a source of generation of a voice in the vehicle's interior is a notification target, when the vehicle speed is less than or equal to the threshold value or the shifter position is the park position, the passenger presence-or-absence determining unit 22 has determined that there is no passenger in the vehicle's interior, and an object concerning the notification target has been detected in the vehicle's interior. As a result, even when the notification target is present at a location outside a detection area of a sensor that detects the notification target in the vehicle's interior, or the notification target is present at a location outside the image-capturing area of the in-vehicle camera, the notification target can be determined from the voice in the vehicle's interior. Thus, failure to detect the notification target left alone in the vehicle's interior can be reduced.

### Third Embodiment.

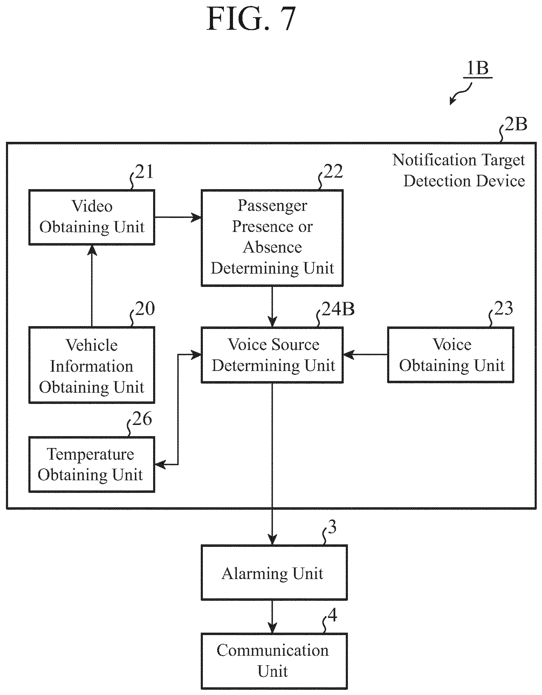

FIG. 7 is a block diagram showing a functional configuration of an alarm system 1B according to a third embodiment of the invention. In FIG. 7, the same components as those of FIG. 1 are given the same reference signs and description thereof is omitted. The alarm system 1B is a system that detects a notification target left alone in the vehicle's interior and performs an alarm process when the notification target has been detected, and includes a notification target detection device 2B, the alarming unit 3, and the communication unit 4. In addition, the notification target detection device 2B is configured to include the vehicle information obtaining unit 20, the video obtaining unit 21, the passenger presence-or-absence determining unit 22, the voice obtaining unit 23, a voice source determining unit 24B, and a temperature obtaining unit 26.

The voice source determining unit 24B determines whether a source of generation of a voice in the vehicle's interior is a notification target, when it has been determined that the vehicle speed is less than or equal to the threshold value or the shifter position is the park position, the passenger presence-or-absence determining unit 22 has determined that a passenger is not shown in video of the vehicle's interior, and a temperature obtained by the temperature obtaining unit 26 is out of an allowable temperature range. In addition, the temperature obtaining unit 26 obtains temperature information of the vehicle's interior from a temperature sensor installed in the vehicle. Though depiction of the temperature sensor is omitted in FIG. 7, any sensor may be used as long as the sensor is installed at a location where the temperature of the vehicle's interior can be detected and has the ability to detect the temperature of the vehicle's interior.

The allowable temperature range is a temperature range in which the health of a notification target left alone in the vehicle's interior is maintained, and is defined by an allowable temperature on a low-temperature side and an allowable temperature on a high-temperature side. For example, when the lower allowable temperature limit is 5°C and the upper allowable temperature limit is 30°C, the allowable temperature range is a range between 5°C and 30°C inclusive. When the temperature of the vehicle's interior is out of the allowable temperature range, there is a possibility of harming the health of a notification target left alone in the vehicle's interior for a long period of time. Hence, there is a need to promptly output an alarm to an area around the vehicle and provide notification to the external device.

On the other hand, when the temperature of the vehicle's interior is within the allowable temperature range, the voice source determining unit 24B does not determine a source of generation of a voice, the alarming unit 3 does not give an alarm, and the communication unit 4 does not provide notification. This indicates that if the temperature of the vehicle's interior is within the allowable temperature range when an adult has left a notification target in the vehicle's interior on purpose, then an alarm and notification are not provided. This configuration enables the alarm system 1B according to the third embodiment to provide an alarm and notification about the fact that the notification target has been left alone in the vehicle's interior, at appropriate timing at which the temperature of the vehicle's interior goes out of the allowable temperature range.

Functions of the vehicle information obtaining unit 20, the video obtaining unit 21, the passenger presence-or-absence determining unit 22, the voice obtaining unit 23, the voice source determining unit 24B, and the temperature obtaining unit 26 in the notification target detection device 2B are implemented by a processing circuit. When the processing circuit is the processing circuit 106 which is dedicated hardware shown in FIG. 2A, the processing circuit 106 corresponds, for example, to a single circuit, a combined circuit, a programmed processor, a parallel programmed processor, an ASIC, an FPGA, or a combination thereof. The functions of the vehicle information obtaining unit 20, the video obtaining unit 21, the passenger presence-or-absence determining unit 22, the voice obtaining unit 23, the voice source determining unit 24B, and the temperature obtaining unit 26 in the notification target detection device 2B may be implemented by different processing circuits, or the functions may be collectively implemented by a single processing circuit.

When the processing circuit is the processor 107 shown in FIG. 2B, the functions of the vehicle information obtaining unit 20, the video obtaining unit 21, the passenger presence-or-absence determining unit 22, the voice obtaining unit 23, the voice source determining unit 24B, and the temperature obtaining unit 26 in the notification target detection device 2B are implemented by software, firmware, or a combination of software and firmware. Note that the software or firmware is described as programs and stored in the memory 108.

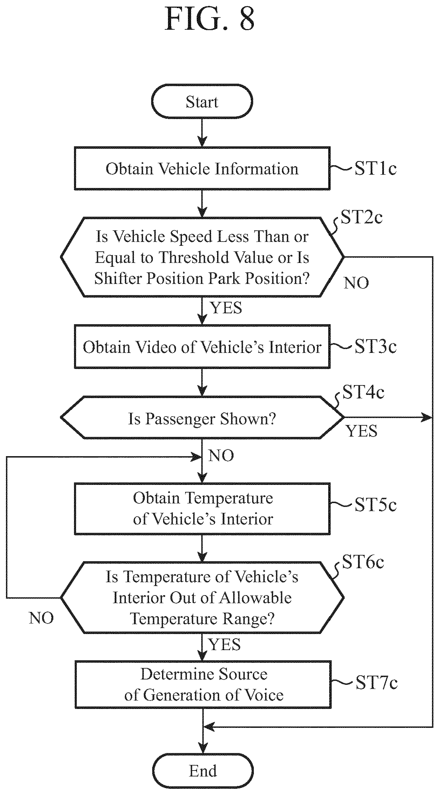

The processor 107 implements the functions of the vehicle information obtaining unit 20, the video obtaining unit 21, the passenger presence-or-absence determining unit 22, the voice obtaining unit 23, the voice source determining unit 24B, and the temperature obtaining unit 26 in the notification target detection device 2B by reading and executing the programs stored in the memory 108. Namely, the notification target detection device 2B includes the memory 108 for storing programs, the execution of which by the processor 107 results in performing processes at step ST1c to ST7c shown in FIG. 8 which will be described later.

The programs cause a computer to perform a procedure or a method for the vehicle information obtaining unit 20, the video obtaining unit 21, the passenger presence-or-absence determining unit 22, the voice obtaining unit 23, the voice source determining unit 24B, and the temperature obtaining unit 26. The memory 108 may be a computer readable storage medium having stored therein programs for causing the computer to function as the vehicle information obtaining unit 20, the video obtaining unit 21, the passenger presence-or-absence determining unit 22, the voice obtaining unit 23, the voice source determining unit 24B, and the temperature obtaining unit 26.

Next, operations will be described.

FIG. 8 is a flowchart showing a notification target detection method according to the third embodiment.

Note that processes at step ST1c to ST4c shown in FIG. 8 are the same as the processes at step ST1 to ST4 shown in FIG. 3 and thus description thereof is omitted.

The temperature obtaining unit 26 obtains a temperature of the vehicle's interior from the temperature sensor installed in the vehicle (step ST5c). Temperature information obtained by the temperature obtaining unit 26 is outputted to the voice source determining unit 24B.

The voice source determining unit 24B determines whether the temperature of the vehicle's interior obtained by the temperature obtaining unit 26 is out of the allowable temperature range (step ST6c). In the determination, if the temperature of the vehicle's interior is not out of the allowable temperature range (step ST6c; NO), then processing returns to the process at step ST5c. By doing so, a future change in the temperature of the vehicle's interior is monitored.

On the other hand, if the temperature of the vehicle's interior is out of the allowable temperature range (step ST6c; YES), then the voice source determining unit 24B determines whether a source of generation of a voice in the vehicle's interior obtained by the voice obtaining unit 23 is a notification target (step ST7c).

In this manner, the voice source determining unit 24B determines whether the source of generation of the voice in the vehicle's interior is the notification target, when it has been determined, on the basis of vehicle information obtained by the vehicle information obtaining unit 20, that the vehicle speed is less than or equal to the threshold value or the shifter position is the park position, the passenger presence-or-absence determining unit 22 has determined that a passenger is not shown in video of the vehicle's interior, and the temperature obtained by the temperature obtaining unit 26 is out of the allowable temperature range.

At step ST7c, the process at step ST1a shown in FIG. 4 is performed, and the processes after step ST1a are performed depending on a result of the determination. Namely, if the source of generation of the voice in the vehicle's interior is only the notification target, then the alarming unit 3 starts an alarm indicating that the notification target has been left alone. When the alarm starts, the communication unit 4 notifies the external device of the fact that the notification target has been left alone in the vehicle's interior.

As described above, the notification target detection device 2B according to the third embodiment includes the temperature obtaining unit 26 that obtains a temperature of the vehicle's interior. The voice source determining unit 24B determines whether a source of generation of a voice in the vehicle's interior is a notification target, when it has been determined that the vehicle speed is less than or equal to the threshold value or the shifter position is the park position, the passenger presence-or-absence determining unit 22 has determined that a passenger is not shown in video of the vehicle's interior, and the temperature of the vehicle's interior is out of the allowable temperature range. As a result, even when it is determined that a passenger is not shown in the video of the vehicle's interior because the notification target is present at a location outside the image-capturing area of the in-vehicle camera, the notification target can be detected from the source of generation of the voice in the vehicle's interior.

Particularly, in the third embodiment, since a determination as to whether the source of generation of the voice is the notification target is made when the temperature of the vehicle's interior is out of the allowable temperature range, an alarm and notification about the fact that the notification target has been left alone in the vehicle's interior can be provided at appropriate timing that takes into account the health of the notification target.

The alarm system 1B according to the third embodiment includes the notification target detection device 2B, the alarming unit 3, and the communication unit 4. Since failure to detect a notification target by the notification target detection device 2B is reduced, an alarm and notification to the external device about the fact that the notification target has been left alone can be accurately provided.

In the notification target detection method according to the third embodiment, a series of processes shown in FIG. 8 are performed, and thus, failure to detect a notification target left alone in the vehicle's interior can be reduced.

Although a case is shown in which the vehicle information obtaining unit 20 determines whether the vehicle speed is less than or equal to the threshold value or whether the shifter position is the park position, on the basis of vehicle information, the configuration is not limited thereto. For example, the voice source determining unit 24B may determine whether the vehicle speed is less than or equal to the threshold value or whether the shifter position is the park position, on the basis of vehicle information inputted from the vehicle information obtaining unit 20.

Although the passenger presence-or-absence determining unit 22 determines whether a passenger is shown in video of the vehicle's interior obtained by the video obtaining unit 21, the configuration is not limited thereto.

For example, the passenger presence-or-absence determining unit 22 may determine whether a passenger is present in the vehicle's interior, on the basis of detection information outputted from any of an infrared sensor, a pressure-sensitive sensor, and a weight sensor provided in the vehicle's interior. In this case, the video obtaining unit 21 may be omitted from the notification target detection device 2B, and the voice source determining unit 24B determines whether a source of generation of a voice in the vehicle's interior is a notification target, when the vehicle speed is less than or equal to the threshold value or the shifter position is the park position, the passenger presence-or-absence determining unit 22 has determined that there is no passenger in the vehicle's interior, and the temperature of the vehicle's interior is out of the allowable temperature range. As a result, even when the notification target is present at a location outside a detection area of a sensor that detects the notification target in the vehicle's interior, the notification target can be determined from the voice in the vehicle's interior. Thus, failure to detect the notification target left alone in the vehicle's interior can be reduced.

In addition, the passenger presence-or-absence determining unit 22 may determine whether a passenger is shown in video of the vehicle's interior obtained by the video obtaining unit 21, and further determine whether a passenger is present in the vehicle's interior, on the basis of detection information outputted from any of an infrared sensor, a pressure-sensitive sensor, and a weight sensor provided in the vehicle's interior. In this case, too, the voice source determining unit 24B determines whether a source of generation of a voice in the vehicle's interior is a notification target, when the vehicle speed is less than or equal to the threshold value or the shifter position is the park position, the passenger presence-or-absence determining unit 22 has determined that there is no passenger in the vehicle's interior, and the temperature of the vehicle's interior is out of the allowable temperature range. As a result, even when the notification target is present at a location outside a detection area of a sensor that detects the notification target in the vehicle's interior, or the notification target is present at a location outside the image-capturing area of the in-vehicle camera, the notification target can be determined from the voice in the vehicle's interior. Thus, failure to detect the notification target left alone in the vehicle's interior can be reduced.

Although a configuration in which the temperature obtaining unit 26 is added to the notification target detection device 2 shown in FIG. 1 is shown so far, the notification target detection device according to the third embodiment may have a configuration in which the temperature obtaining unit 26 is added to the notification target detection device 2A shown in FIG. 5. In this case, the voice source determining unit 24B determines whether a source of generation of a voice in the vehicle's interior is a notification target, when it has been determined that the vehicle speed is less than or equal to the threshold value or the shifter position is the park position, the passenger presence-or-absence determining unit 22 has determined that a passenger is not shown in video of the vehicle's interior, the object detecting unit 25 has detected an object concerning the notification target, and the temperature of the vehicle's interior is out of the allowable temperature range. By such a configuration, too, failure to detect a notification target left alone in the vehicle's interior can be reduced.

### Fourth Embodiment.

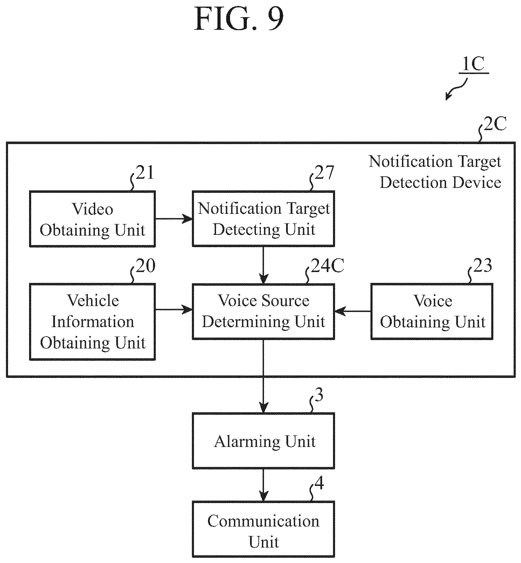

FIG. 9 is a block diagram showing a functional configuration of an alarm system 1C according to a fourth embodiment of the invention. In FIG. 9, the same components as those of FIG. 1 are given the same reference signs and description thereof is omitted. The alarm system 1C is a system that detects a notification target left alone in the vehicle's interior and performs an alarm process when the notification target has been detected, and includes a notification target detection device 2C, the alarming unit 3, and the communication unit 4. In addition, the notification target detection device 2C is configured to include the vehicle information obtaining unit 20, the video obtaining unit 21, the voice obtaining unit 23, a voice source determining unit 24C, and a notification target detecting unit 27.

The voice source determining unit 24C determines whether a source of generation of a voice in the vehicle's interior is a notification target, when the notification target detecting unit 27 has detected the notification target when the vehicle speed exceeds a threshold value and it has been determined, on the basis of vehicle information obtained by the vehicle information obtaining unit 20, that the vehicle speed is less than or equal to the threshold value or the shifter position is the park position. The threshold value is vehicle speed indicating that the vehicle is parked, and for example, 0 (km/h) is set. The voice source determining unit 24C uses the fact that the notification target detecting unit 27 has detected a notification target when the vehicle speed exceeds the threshold value, i.e., during travel of the vehicle, as a condition for starting a determination as to whether the notification target has been left alone in the vehicle's interior.

The notification target detecting unit 27 detects a notification target in the vehicle's interior on the basis of video obtained by the video obtaining unit 21. For example, the notification target detecting unit 27 detects a notification target by performing image recognition on video of the vehicle's interior. The DMS is generally a system for monitoring a state of a driver who is driving the vehicle, and thus, the in-vehicle camera included in the DMS starts up and shoots the vehicle's interior when the vehicle is traveling, and when the vehicle is parked, the operation of the in-vehicle camera is stopped. Hence, when the video obtaining unit 21 obtains video of the vehicle's interior from the in-vehicle camera included in the DMS, the video obtaining unit 21 obtains only video shot when the vehicle is traveling. The notification target detecting unit 27 detects whether a notification target is present in the vehicle's interior during travel of the vehicle during which the DMS is up and running.

Functions of the vehicle information obtaining unit 20, the video obtaining unit 21, the voice obtaining unit 23, the voice source determining unit 24C, and the notification target detecting unit 27 in the notification target detection device 2C are implemented by a processing circuit. When the processing circuit is the processing circuit 106 which is dedicated hardware shown in FIG. 2A, the processing circuit 106 corresponds, for example, to a single circuit, a combined circuit, a programmed processor, a parallel programmed processor, an ASIC, an FPGA, or a combination thereof. The functions of the vehicle information obtaining unit 20, the video obtaining unit 21, the voice obtaining unit 23, the voice source determining unit 24C, and the notification target detecting unit 27 in the notification target detection device 2C may be implemented by different processing circuits, or the functions may be collectively implemented by a single processing circuit.

When the processing circuit is the processor 107 shown in FIG. 2B, the functions of the vehicle information obtaining unit 20, the video obtaining unit 21, the voice obtaining unit 23, the voice source determining unit 24C, and the notification target detecting unit 27 in the notification target detection device 2C are implemented by software, firmware, or a combination of software and firmware. Note that the software or firmware is described as programs and stored in the memory 108.

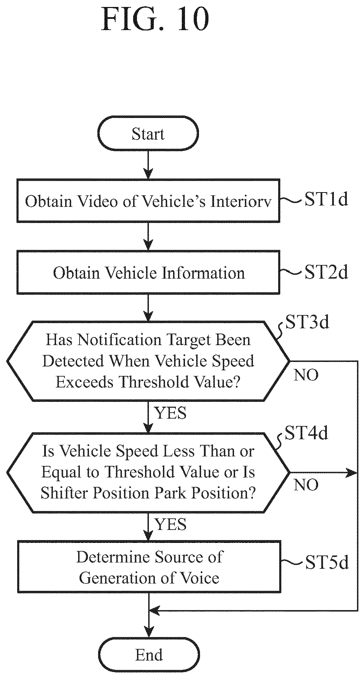

The processor 107 implements the functions of the vehicle information obtaining unit 20, the video obtaining unit 21, the voice obtaining unit 23, the voice source determining unit 24C, and the notification target detecting unit 27 in the notification target detection device 2C by reading and executing the programs stored in the memory 108. Namely, the notification target detection device 2C includes the memory 108 for storing programs, the execution of which by the processor 107 results in performing processes at step ST1d to ST5d shown in FIG. 10 which will be described later.

The programs cause a computer to perform a procedure or a method for the vehicle information obtaining unit 20, the video obtaining unit 21, the voice obtaining unit 23, the voice source determining unit 24C, and the notification target detecting unit 27. The memory 108 may be a computer readable storage medium having stored therein programs for causing the computer to function as the vehicle information obtaining unit 20, the video obtaining unit 21, the voice obtaining unit 23, the voice source determining unit 24C, and the notification target detecting unit 27.

Next, operations will be described.

FIG. 10 is a flowchart showing a notification target detection method according to the fourth embodiment.

First, the video obtaining unit 21 obtains video in which the vehicle's interior is shot (step ST1d). For example, the video obtaining unit 21 obtains video of the vehicle's interior from the camera 100 shown in FIGS. 2A and 2B and outputs the video to the notification target detecting unit 27. The notification target detecting unit 27 detects a notification target in the vehicle's interior on the basis of the video obtained by the video obtaining unit 21. Detection information indicating whether a notification target is present is outputted to the voice source determining unit 24C from the notification target detecting unit 27.

The vehicle information obtaining unit 20 obtains vehicle information indicating the vehicle speed or shifter position of the vehicle and outputs the vehicle information to the voice source determining unit 24C (step ST2d).

The voice source determining unit 24C determines whether a notification target has been detected in the vehicle's interior when the vehicle speed exceeds the threshold value, on the basis of the vehicle information obtained by the vehicle information obtaining unit 20 and the detection information inputted from the notification target detecting unit 27 (step ST3d). If a notification target has not been detected in the vehicle's interior when the vehicle speed exceeds the threshold value (step ST3d; NO), it is determined that a notification target is not in the vehicle and thus the process of FIG. 10 ends.

If a notification target has been detected in the vehicle's interior when the vehicle speed exceeds the threshold value (step ST3d; YES), the voice source determining unit 24C determines whether the vehicle speed of the vehicle is less than or equal to the threshold value or whether the shifter position is the park position, on the basis of the vehicle information obtained by the vehicle information obtaining unit 20 (step ST4d). If the vehicle speed exceeds the threshold value or the shifter position is other than the park position (step ST4d; NO), the vehicle is traveling and thus the process of FIG. 10 ends.

On the other hand, if the vehicle speed is less than or equal to the threshold value or the shifter position is the park position (step ST4d; YES), the voice source determining unit 24C determines whether a source of generation of a voice in the vehicle's interior obtained by the voice obtaining unit 23 is the notification target (step ST5d).

In this manner, the voice source determining unit 24C determines whether the source of generation of the voice in the vehicle's interior is the notification target, when the notification target detecting unit 27 has detected the notification target when the vehicle speed exceeds the threshold value and it has been determined, on the basis of the vehicle information obtained by the vehicle information obtaining unit 20, that the vehicle speed is less than or equal to the threshold value or the shifter position is the park position.

At step ST5d, the process at step ST1a shown in FIG. 4 is performed, and the processes after step ST1a are performed depending on a result of the determination. Namely, if the source of generation of the voice in the vehicle's interior is only the notification target, then the alarming unit 3 starts an alarm indicating that the notification target has been left alone. When the alarm starts, the communication unit 4 notifies the external device of the fact that the notification target has been left alone in the vehicle's interior.

As described above, the notification target detection device 2C according to the fourth embodiment includes the vehicle information obtaining unit 20, the video obtaining unit 21, the voice obtaining unit 23, the voice source determining unit 24C, and the notification target detecting unit 27. The voice source determining unit 24C determines whether a source of generation of a voice in the vehicle's interior is a notification target, when the notification target detecting unit 27 has detected the notification target when the vehicle speed exceeds the threshold value and it has been determined, on the basis of vehicle information obtained by the vehicle information obtaining unit 20, that the vehicle speed is less than or equal to the threshold value or the shifter position is the park position. As a result, failure to detect a notification target left alone in the vehicle's interior can be reduced. In addition, the voice source determining unit 24C determines a source of generation of a voice in the vehicle's interior at timing at which the vehicle is parked, when a notification target has been detected in the vehicle's interior during travel of the vehicle. Thus, a determination as to whether a passenger is present does not need to be made using video of the vehicle's interior when the vehicle is parked, and a processing load of the notification target detection device 2C can be reduced.

The alarm system 1C according to the fourth embodiment includes the notification target detection device 2C, the alarming unit 3, and the communication unit 4. Since failure to detect a notification target by the notification target detection device 2C is reduced, an alarm and notification to the external device about the fact that the notification target has been left alone can be accurately provided.

In addition, in the notification target detection method according to the fourth embodiment, a series of processes shown in FIG. 10 are performed, and thus, failure to detect a notification target left alone in the vehicle's interior can be reduced.

In addition, the object detecting unit 25 shown in the second embodiment may be added to the notification target detection device 2C according to the fourth embodiment. In this case, the voice source determining unit 24C determines whether a source of generation of a voice in the vehicle's interior is a notification target, when the notification target has been detected when the vehicle speed exceeds the threshold value, it has been determined that the vehicle speed is less than or equal to the threshold value or the shifter position is the park position, and the object detecting unit 25 has detected an object concerning the notification target. By such a configuration, too, failure to detect a notification target left alone in the vehicle's interior can be reduced.

Furthermore, the temperature obtaining unit 26 shown in the third embodiment may be added to the notification target detection device 2C according to the fourth embodiment. In this case, the voice source determining unit 24C determines whether a source of generation of a voice in the vehicle's interior is a notification target, when the notification target has been detected when the vehicle speed exceeds the threshold value, it has been determined that the vehicle speed is less than or equal to the threshold value or the shifter position is the park position, and the temperature of the vehicle's interior obtained by the temperature obtaining unit 26 is out of the allowable temperature range. By such a configuration, too, failure to detect a notification target left alone in the vehicle's interior can be reduced.

Furthermore, the object detecting unit 25 shown in the second embodiment and the temperature obtaining unit 26 shown in the third embodiment may be added to the notification target detection device 2C according to the fourth embodiment. In this case, the voice source determining unit 24C determines whether a source of generation of a voice in the vehicle's interior is a notification target, when the notification target has been detected when the vehicle speed exceeds the threshold value, it has been determined that the vehicle speed is less than or equal to the threshold value or the shifter position is the park position, the object detecting unit 25 has detected an object concerning the notification target, and the temperature of the vehicle's interior obtained by the temperature obtaining unit 26 is out of the allowable temperature range.

By such a configuration, too, failure to detect a notification target left alone in the vehicle's interior can be reduced.

Note that the present invention is not limited to the above-described embodiments, and a free combination of the embodiments, modifications to any component of the embodiments, or omissions of any component in the embodiments are possible within the scope defined by the appended claims.

### INDUSTRIAL APPLICABILITY

Notification target detection devices according to the invention can reduce failure to detect a notification target left alone in a vehicle's interior, and thus, can be used in systems for monitoring passengers in a vehicle.

### REFERENCE SIGNS LIST

1, 1A, 1B, 1C: alarm system, 2, 2A, 2B, 2C: notification target detection device, 3: alarming unit, 4: communication unit, 20: vehicle information obtaining unit, 21: video obtaining unit, 22: passenger presence-or-absence determining unit, 23: voice obtaining unit, 24, 24A, 24B, 24C: voice source determining unit, 25: object detecting unit, 26: temperature obtaining unit, 27: notification target detecting unit, 100: camera, 101: control interface, 102: ECU for in-vehicle use, 103: microphone, 104: alarming device, 105: communication device, 106: processing circuit, 107: processor, 108: memory

## Claims

1. A notification target detection device comprising:
a vehicle information obtaining unit (20) for obtaining vehicle information indicating a vehicle speed or a shifter position;
a video obtaining unit (21) for obtaining video in which a vehicle's interior is shot;
a passenger presence-or-absence determining unit (22) for determining that a passenger is present in the vehicle's interior when an image of the passenger except for a child or a pet that is a notification target, of which a person outside a vehicle is to be informed, is included in the video in the vehicle's interior obtained by the video obtaining unit (21) and determining that the passenger is not present in the vehicle's interior when the image of the passenger that is not the notification target is not included in the video in the vehicle's interior obtained by the video obtaining unit (21);
a voice obtaining unit (23) for obtaining a voice in the vehicle's interior;
a voice source determining unit (24, 24A to 24C) for determining whether a source of generation of the voice in the vehicle's interior is the notification target alone of which the person outside the vehicle is to be informed, based on the voice in the vehicle's interior obtained by the voice obtaining unit (23); and
an object detecting unit (25) for detecting an object related to the notification target in the vehicle's interior on a basis of the video obtained by the video obtaining unit (21),
wherein the voice source determining unit (24, 24A to 24C) determines whether the source of generation of the voice in the vehicle's interior is the notification target alone when it has been determined that the vehicle speed is less than or equal to a threshold value or the shifter position is a park position on a basis of the vehicle information obtained by the vehicle information obtaining unit (20), and when the passenger presence-or-absence determining unit (22) has determined that a passenger is not present in the vehicle's interior and the object detecting unit (25) has detected an object related to the notification target in the vehicle's interior.

2. The notification target detection device according to claim 1,
wherein the passenger presence-or-absence determining unit (22) determines whether a passenger is present in the vehicle's interior on a basis of detection information outputted by a sensor provided in the vehicle's interior.

3. The notification target detection device according to any one of claims 1 to 2, comprising a temperature obtaining unit (26) for obtaining a temperature of the vehicle's interior,
wherein the voice source determining unit (24, 24A to 24C) determines whether the source of generation of the voice in the vehicle's interior is the notification target when it has been determined that the vehicle speed is less than or equal to the threshold value or the shifter position is the park position on the basis of the vehicle information obtained by the vehicle information obtaining unit (20), the passenger presence-or-absence determining unit (22) has determined that a passenger is not present in the vehicle's interior, and the temperature obtained by the temperature obtaining unit (26) is out of an allowable temperature range.

4. A notification target detection device comprising:
a vehicle information obtaining unit (20) for obtaining vehicle information indicating a vehicle speed or a shifter position;
a video obtaining unit (21) for obtaining video in which a vehicle's interior is shot;
a voice obtaining unit (23) for obtaining a voice in the vehicle's interior;
a voice source determining unit (24, 24A to 24C) for determining whether a source of generation of the voice in the vehicle's interior is a child alone or a pet alone that is a notification target of which a person outside a vehicle is to be informed, based on the voice in the vehicle's interior that is obtained by the voice obtaining unit (23); and
a notification target detecting unit (27) for detecting the notification target in the vehicle's interior on a basis of an image recognition result of the video in the vehicle's interior that is obtained by the video obtaining unit (21),
wherein the voice source determining unit (24, 24A to 24C) determines whether the source of generation of the voice in the vehicle's interior is the notification target alone when the notification target detecting unit (27) has detected the notification target in a state where the vehicle speed exceeds a threshold value, and when it has been determined that the vehicle speed is less than or equal to the threshold value or the shifter position is a park position on a basis of the vehicle information obtained by the vehicle information obtaining unit (20).

5. The notification target detection device according to claim 4, comprising an object detecting unit (25) for detecting an object related to the notification target in the vehicle's interior on a basis of the video obtained by the video obtaining unit (21),
wherein the voice source determining unit determines whether the source of generation of the voice in the vehicle's interior is the notification target, when the notification target detecting unit has detected the notification target in a state where the vehicle speed exceeds the threshold value, it has been determined that the vehicle speed is less than or equal to the threshold value or the shifter position is the park position on a basis of the vehicle information obtained by the vehicle information obtaining unit (20), and the object detecting unit (25) has detected an object related to the notification target in the vehicle's interior.

6. The notification target detection device according to claim 4 or 5, comprising a temperature obtaining unit (26) for obtaining a temperature of the vehicle's interior,
wherein the voice source determining unit (24, 24A to 24C) determines whether the source of generation of the voice in the vehicle's interior is the notification target when the notification target detecting unit has detected the notification target in a state where the vehicle speed exceeds the threshold value, it has been determined that the vehicle speed is less than or equal to the threshold value or the shifter position is the park position on a basis of the vehicle information obtained by the vehicle information obtaining unit (20), and the temperature obtained by the temperature obtaining unit (26) is out of an allowable temperature range.

7. An alarm system comprising:
a notification target detection device according to any one of claims 1 to 6;
an alarming unit for outputting an alarm to an area around a vehicle; and
a communication unit for notifying an external device that a notification target has been left alone in a vehicle's interior,
wherein the alarming unit outputs an alarm when a voice source determining unit (24, 24A to 24C) has determined that a source of generation of a voice in the vehicle's interior is only the notification target, and
the communication unit provides notification to the external device in response to the output of the alarm by the alarming unit.

8. A notification target detection method comprising:
obtaining, by a vehicle information obtaining unit (20), vehicle information indicating vehicle speed or a shifter position;
obtaining, by a video obtaining unit (21), video in which a vehicle's interior is shot;
determining, by a passenger presence-or-absence determining unit (22), that a passenger is present in the vehicle's interior when an image of the passenger except for a child or a pet that is a notification target, of which a person outside a vehicle is to be informed, is included in the video in the vehicle's interior obtained by the video obtaining unit (21) and determining that the passenger is not present in the vehicle's interior when the image of the passenger that is not the notification target is not included in the video in the vehicle's interior obtained by the video obtaining unit (21);
obtaining, by a voice obtaining unit (23), a voice in the vehicle's interior;
determining, by a voice source determining unit (24, 24A to 24C), whether a source of generation of the voice in the vehicle's interior is the notification target alone of which the person outside the vehicle is to be informed, based on the voice in the vehicle's interior obtained by the voice obtaining unit (23);
obtaining, by an object detecting unit (25), a detection of an object related to the notification target in the vehicle's interior on a basis of the video obtained by the video obtaining unit (21),
determining, by the voice source determining unit (24, 24A to 24C), whether the source of generation of the voice in the vehicle's interior is the notification target alone, when it has been determined that the vehicle speed is less than or equal to a threshold value or the shifter position is a park position on a basis of the vehicle information obtained by the vehicle information obtaining unit (20), when it has been determined, by the passenger presence-or-absence determining unit (22), that a passenger is not present in the vehicle's interior, and when an object related to the notification target in the vehicle's interior has been detected by the object detecting unit (25).

## Patentansprüche

1. Benachrichtigungsziel-Detektionsvorrichtung, umfassend:
eine Fahrzeuginformationen-Erhalteeinheit (20) zum Erhalten von Fahrzeuginformationen, welche eine Fahrzeuggeschwindigkeit oder eine Schaltposition angeben;
eine Videoerhalteeinheit (21) zum Erhalten eines Videos, in welchem ein Fahrzeuginneres abgelichtet ist;
eine Passagier-Anwesenheits-oder-Abwesenheits-Bestimmungseinheit (22) zum Bestimmen, dass ein Passagier in dem Fahrzeuginneren anwesend ist, wenn ein Bild des Passagiers, mit Ausnahme eines Kind oder eines Haustieres, welcher ein Benachrichtigungsziel ist, über welches eine Person außerhalb eines Fahrzeugs zu informieren ist, in dem Video in dem Fahrzeuginneren umfasst ist, welches durch die Videoerhalteeinheit (21) erhalten ist, und zum Bestimmen, dass der Passagier nicht in dem Fahrzeuginneren anwesend ist, wenn das Bild des Passagiers, welcher nicht das Benachrichtigungsziel ist, nicht in dem Video in dem Fahrzeuginneren umfasst ist, welches durch die Videoerhalteeinheit (21) erhalten ist;
eine Stimmenerhalteeinheit (23) zum Erhalten einer Stimme in dem Fahrzeuginneren;
eine Stimmenursprung-Bestimmungseinheit (24, 24A bis 24C) zum Bestimmen, ob ein Ursprung einer Erzeugung der Stimme in dem Fahrzeuginneren das Benachrichtigungsziel alleine ist, über welches die Person außerhalb des Fahrzeugs zu informieren ist, auf Grundlage der Stimme in dem Fahrzeuginneren, welche durch die Stimmenerhalteeinheit (23) erhalten ist; und
eine Objektdetektiereinheit (25) zum Detektieren eines Objekts in Bezug auf das Benachrichtigungsziel in dem Fahrzeuginneren, auf Grundlage des Videos, welches durch die Videoerhalteeinheit (21) erhalten ist,
wobei die Stimmenursprung-Bestimmungseinheit (24, 24A bis 24C) bestimmt, ob der Ursprung einer Erzeugung der Stimme in dem Fahrzeuginneren das Benachrichtigungsziel alleine ist, wenn bestimmt worden ist, dass die Fahrzeuggeschwindigkeit geringer oder gleich einem Schwellenwert ist oder die Schaltposition in einer Parkposition ist, auf Grundlage der Fahrzeuginformationen, welche durch die Fahrzeuginformationen-Erhalteeinheit (20) erhalten sind, und wenn die Passagier-Anwesenheits-oder-Abwesenheits-Bestimmungseinheit (22) bestimmt hat, dass ein Passagier nicht in dem Fahrzeuginneren anwesend ist, und die Objektdetektiereinheit (25) ein Objekt in Bezug auf das Benachrichtigungsziel in dem Fahrzeuginneren detektiert hat.

2. Benachrichtigungsziel-Detektionsvorrichtung nach Anspruch 1,
wobei die Passagier-Anwesenheits-oder-Abwesenheits-Bestimmungseinheit (22) bestimmt, ob ein Passagier in dem Fahrzeuginneren anwesend ist, auf Grundlage von Detektionsinformationen, welche durch einen Sensor ausgegeben sind, welcher in dem Fahrzeuginneren bereitgestellt ist.

3. Benachrichtigungsziel-Detektionsvorrichtung nach einem der Ansprüche 1 bis 2, umfassend eine Temperaturerhalteeinheit (26) zum Erhalten einer Temperatur des Fahrzeuginneren,
wobei die Stimmenursprung-Bestimmungseinheit (24, 24A bis 24C) bestimmt, ob der Ursprung einer Erzeugung der Stimme in dem Fahrzeuginneren das Benachrichtigungsziel ist, wenn bestimmt worden ist, dass die Fahrzeuggeschwindigkeit geringer oder gleich dem Schwellenwert ist oder die Schaltposition die Parkposition ist, auf Grundlage der Fahrzeuginformationen, welche durch die Fahrzeuginformationen-Erhalteeinheit (20) erhalten sind, dass die Passagier-Anwesenheits-oder-Abwesenheits-Bestimmungseinheit (22) bestimmt hat, dass ein Passagier in dem Fahrzeuginneren nicht anwesend ist, und dass die Temperatur, welche durch die Temperaturerhalteeinheit (26) erhalten ist, außerhalb eines erlaubten Temperaturbereichs ist.

4. Benachrichtigungsziel-Detektionsvorrichtung, umfassend:
eine Fahrzeuginformationen-Erhalteeinheit (20) zum Erhalten von Fahrzeuginformationen, welche eine Fahrzeuggeschwindigkeit oder eine Schaltposition angeben;
eine Videoerhalteeinheit (21) zum Erhalten eines Videos, in welchem ein Fahrzeuginneres abgelichtet ist;
eine Stimmenerhalteeinheit (23) zum Erhalten einer Stimme in dem Fahrzeuginneren;
eine Stimmenursprung-Bestimmungseinheit (24, 24A bis 24C) zum Bestimmen, ob ein Ursprung einer Erzeugung der Stimme in dem Fahrzeuginneren ein Kind alleine oder ein Haustier alleine ist, welches ein Benachrichtigungsziel, über welches die Person außerhalb des Fahrzeugs zu informieren ist, auf Grundlage der Stimme in dem Fahrzeuginneren, welche durch die Stimmenerhalteeinheit (23) erhalten ist; und
eine Benachrichtigungsziel-Detektiereinheit (27) zum Detektieren des Benachrichtigungsziels in dem Fahrzeuginneren, auf Grundlage eines Bilderkennungsergebnisses des Videos in dem Fahrzeuginneren, welches durch die Videoerhalteeinheit (21) erhalten ist,
wobei die Stimmenursprung-Bestimmungseinheit (24, 24A bis 24C) bestimmt, ob der Ursprung einer Erzeugung der Stimme in dem Fahrzeuginneren das Benachrichtigungsziel alleine ist, wenn die Benachrichtigungsziel-Detektiereinheit (27) das Benachrichtigungsziel in einem Zustand detektiert hat, in welchem die Fahrzeuggeschwindigkeit einen Schwellenwert überschreitet, und wenn sie bestimmt hat, dass die Fahrzeuggeschwindigkeit geringer oder gleich dem Schwellenwert ist oder die Schaltposition eine Parkposition ist, auf Grundlage der Fahrzeuginformationen, welche durch die Fahrzeuginformationen-Erhalteeinheit (20) erhalten sind.

5. Benachrichtigungsziel-Detektionsvorrichtung nach Anspruch 4, umfassend eine Objektdetektiereinheit (25) zum Detektieren eines Objekts in Bezug auf das Benachrichtigungsziel in dem Fahrzeuginneren, auf Grundlage des Videos, welches durch die Videoerhalteeinheit (21) erhalten ist,
wobei die Stimmenursprung-Bestimmungseinheit bestimmt, ob der Ursprung einer Erzeugung der Stimme in dem Fahrzeuginneren das Benachrichtigungsziel ist, wenn die Benachrichtungsziel-Detektiereinheit das Benachrichtigungsziel in einem Zustand detektiert hat, in welchem die Fahrzeuggeschwindigkeit den Schwellenwert überschreitet, wenn bestimmt worden ist, dass die Fahrzeuggeschwindigkeit geringer als oder gleich dem Schwellenwert ist oder die Schaltposition die Parkposition ist, auf Grundlage der Fahrzeuginformationen, welche durch die Fahrzeuginformationen-Erhalteeinheit (20) erhalten sind, und die Objektdetektiereinheit (25) ein Objekt in Bezug auf das Benachrichtigungsziel in dem Fahrzeuginneren detektiert hat.

6. Benachrichtigungsziel-Detektionsvorrichtung nach Anspruch 4 oder 5, umfassend eine Temperaturerhalteeinheit (26) zum Erhalten einer Temperatur des Fahrzeuginneren,
wobei die Stimmenursprung-Bestimmungseinheit (24, 24A bis 24C) bestimmt, ob der Ursprung einer Erzeugung der Stimme in dem Fahrzeuginneren das Benachrichtigungsziel ist, wenn die Benachrichtigungsziel-Detektiereinheit das Benachrichtigungsziel in einem Zustand detektiert hat, in welchem die Fahrzeuggeschwindigkeit den Schwellenwert überschreitet, wenn bestimmt worden ist, dass die Fahrzeuggeschwindigkeit geringer oder gleich dem Schwellenwert ist oder die Schaltposition die Parkposition ist, auf Grundlage der Fahrzeuginformationen, welche durch die Fahrzeuginformationen-Erhalteeinheit (20) erhalten sind, und die Temperatur, welche durch die Temperaturerhalteeinheit (26) erhalten ist, außerhalb eines erlaubten Temperaturbereichs ist.

7. Alarmsystem, umfassend:
eine Benachrichtigungsziel-Detektionsvorrichtung nach einem der Ansprüche 1 bis 6;
eine Alarmeinheit zum Ausgeben eines Alarms zu einer Umgebung um ein Fahrzeug herum; und
eine Kommunikationseinheit zum Benachrichtigen einer externen Vorrichtung, dass ein Benachrichtigungsziel in einem Fahrzeuginneren alleine gelassen worden ist,
wobei die Alarmeinheit einen Alarm ausgibt, wenn eine Stimmenursprungs-Bestimmungseinheit (24, 24A bis 24C) bestimmt hat, dass ein Ursprung einer Erzeugung einer Stimme in dem Fahrzeuginneren nur das Benachrichtigungsziel ist, und
die Kommunikationseinheit eine Benachrichtigung zu der externen Vorrichtung bereitstellt, als Antwort auf das Ausgeben des Alarms durch die Alarmeinheit.

8. Benachrichtigungsziel-Detektionsverfahren, umfassend:
Erhalten, durch eine Fahrzeuginformationen-Erhalteeinheit (20), von Fahrzeuginformationen, welche eine Fahrzeuggeschwindigkeit oder eine Schaltposition angeben;
Erhalten, durch eine Videoerhalteeinheit (21), eines Videos, in welchem ein Fahrzeuginneres abgelichtet ist;
Bestimmen, durch eine Passagier-Anwesenheits-oder-Abwesenheits-Bestimmungseinheit (22), dass ein Passagier in dem Fahrzeuginneren anwesend ist, wenn ein Bild des Passagiers, mit Ausnahme eines Kind oder eines Haustieres, welcher ein Benachrichtigungsziel ist, über welches eine Person außerhalb eines Fahrzeugs zu informieren ist, in dem Video in dem Fahrzeuginneren umfasst ist, welches durch die Videoerhalteeinheit (21) erhalten wird, und Bestimmen, dass der Passagier nicht in dem Fahrzeuginneren anwesend ist, wenn das Bild des Passagiers, welcher nicht das Benachrichtigungsziel ist, nicht in dem Video in dem Fahrzeuginneren umfasst ist, welches durch die Videoerhalteeinheit (21) erhalten wird;
Erhalten, durch eine Stimmenerhalteeinheit (23), einer Stimme in dem Fahrzeuginneren;
Bestimmen, durch eine Stimmenursprung-Bestimmungseinheit (24, 24A bis 24C), ob ein Ursprung einer Erzeugung der Stimme in dem Fahrzeuginneren das Benachrichtigungsziel alleine ist, über welches die Person außerhalb des Fahrzeugs zu informieren ist, auf Grundlage der Stimme in dem Fahrzeuginneren, welche durch die Stimmenerhalteeinheit (23) erhalten wird;
Erhalten, durch eine Objektdetektiereinheit (25), einer Detektion eines Objekts in Bezug auf das Benachrichtigungsziel in dem Fahrzeuginneren, auf Grundlage des Videos, welches durch die Videoerhalteeinheit (21) erhalten wird,
Bestimmen, durch die Stimmenursprung-Bestimmungseinheit (24, 24A bis 24C), ob der Ursprung einer Erzeugung der Stimme in dem Fahrzeuginneren das Benachrichtigungsziel alleine ist, wenn bestimmt worden ist, dass die Fahrzeuggeschwindigkeit geringer als oder gleich einem Schwellenwert ist oder die Schaltposition in einer Parkposition ist, auf Grundlage der Fahrzeuginformationen, welche durch die Fahrzeuginformationen-Erhalteeinheit (20) erhalten werden, wenn durch die Passagier-Anwesenheits-oder-Abwesenheits-Bestimmungseinheit (22) bestimmt worden ist, dass ein Passagier nicht in dem Fahrzeuginneren anwesend ist, und wenn ein Objekt in Bezug auf das Benachrichtigungsziel in dem Fahrzeuginneren durch die Objektdetektiereinheit (25) detektiert worden ist.

## Revendications

1. Dispositif de détection de cible de notification comprenant :
une unité d'obtention d'informations de véhicule (20) pour obtenir des informations de véhicule indiquant une vitesse de véhicule ou une position de levier de vitesses ;
une unité d'obtention de vidéo (21) pour obtenir une vidéo dans laquelle l'intérieur d'un véhicule est filmé ;
une unité de détermination de présence ou d'absence de passager (22) pour déterminer qu'un passager est présent à l'intérieur du véhicule lorsqu'une image du passager, à l'exception d'un enfant ou d'un animal de compagnie qui sont une cible de notification, dont une personne à l'extérieur d'un véhicule doit être informée, est comprise dans la vidéo à l'intérieur du véhicule obtenue par l'unité d'obtention de vidéo (21) et déterminer que le passager n'est pas présent à l'intérieur du véhicule lorsque l'image du passager qui n'est pas la cible de notification n'est pas comprise dans la vidéo à l'intérieur du véhicule obtenue par l'unité d'obtention de vidéo (21) ;
une unité d'obtention de voix (23) pour obtenir une voix à l'intérieur du véhicule ;
une unité de détermination de source vocale (24, 24A à 24C) pour déterminer si une source de génération de la voix à l'intérieur du véhicule est la cible de notification seule dont la personne à l'extérieur du véhicule doit être informée, sur la base de la voix à l'intérieur du véhicule obtenue par l'unité d'obtention de voix (23) ; et
une unité de détection d'objet (25) pour détecter un objet lié à la cible de notification à l'intérieur du véhicule sur la base de la vidéo obtenue par l'unité d'obtention de vidéo (21),
dans lequel l'unité de détermination de source vocale (24, 24A à 24C) détermine si la source de génération de la voix à l'intérieur du véhicule est la cible de notification seule lorsqu'il a été déterminé que la vitesse de véhicule est inférieure ou égale à une valeur seuil ou que la position de levier de vitesses est une position de stationnement sur la base des informations de véhicule obtenues par l'unité d'obtention d'informations de véhicule (20), et lorsque l'unité de détermination de présence ou d'absence de passager (22) a déterminé qu'un passager n'est pas présent à l'intérieur du véhicule et que l'unité de détection d'objet (25) a détecté un objet lié à la cible de notification à l'intérieur du véhicule.

2. Dispositif de détection de cible de notification selon la revendication 1,
dans lequel l'unité de détermination de présence ou d'absence de passager (22) détermine si un passager est présent à l'intérieur du véhicule sur la base d'informations de détection émises par un capteur fourni à l'intérieur du véhicule.

3. Dispositif de détection de cible de notification selon l'une quelconque des revendications 1 et 2, comprenant une unité d'obtention de température (26) pour obtenir une température de l'intérieur du véhicule,
dans lequel l'unité de détermination de source vocale (24, 24A à 24C) détermine si la source de génération de la voix à l'intérieur du véhicule est la cible de notification lorsqu'il a été déterminé que la vitesse de véhicule est inférieure ou égale à la valeur seuil ou que la position de levier de vitesses est la position de stationnement sur la base des informations de véhicule obtenues par l'unité d'obtention d'informations de véhicule (20), que l'unité de détermination de présence ou d'absence de passager (22) a déterminé qu'un passager n'est pas présent à l'intérieur du véhicule, et que la température obtenue par l'unité d'obtention de température (26) est en dehors d'une plage de températures admissible.

4. Dispositif de détection de cible de notification comprenant :
une unité d'obtention d'informations de véhicule (20) pour obtenir des informations de véhicule indiquant une vitesse de véhicule ou une position de levier de vitesses ;
une unité d'obtention de vidéo (21) pour obtenir une vidéo dans laquelle l'intérieur d'un véhicule est filmé ;
une unité d'obtention de voix (23) pour obtenir une voix à l'intérieur du véhicule ;
une unité de détermination de source vocale (24, 24A à 24C) pour déterminer si une source de génération de la voix à l'intérieur du véhicule est un enfant seul ou un animal de compagnie seul qui sont une cible de notification dont une personne à l'extérieur d'un véhicule doit être informée, sur la base de la voix à l'intérieur du véhicule qui est obtenue par l'unité d'obtention de voix (23) ; et
une unité de détection de cible de notification (27) pour détecter la cible de notification à l'intérieur du véhicule sur la base d'un résultat de reconnaissance d'image de la vidéo à l'intérieur du véhicule qui est obtenue par l'unité d'obtention de vidéo (21),
dans lequel l'unité de détermination de source vocale (24, 24A à 24C) détermine si la source de génération de la voix à l'intérieur du véhicule est la cible de notification seule lorsque l'unité de détection de cible de notification (27) a détecté la cible de notification dans un état où la vitesse de véhicule dépasse une valeur seuil, et lorsqu'il a été déterminé que la vitesse de véhicule est inférieure ou égale à la valeur seuil ou que la position de levier de vitesses est une position de stationnement sur la base des informations de véhicule obtenues par l'unité d'obtention d'informations de véhicule (20).

5. Dispositif de détection de cible de notification selon la revendication 4, comprenant une unité de détection d'objet (25) pour détecter un objet lié à la cible de notification à l'intérieur du véhicule sur la base de la vidéo obtenue par l'unité d'obtention de vidéo (21), dans lequel l'unité de détermination de source vocale détermine si la source de génération de la voix à l'intérieur du véhicule est la cible de notification, lorsque l'unité de détection de cible de notification a détecté la cible de notification dans un état où la vitesse de véhicule dépasse la valeur seuil, qu'il a été déterminé que la vitesse de véhicule est inférieure ou égale à la valeur seuil ou que la position de levier de vitesses est la position de stationnement sur la base des informations de véhicule obtenues par l'unité d'obtention d'informations de véhicule (20), et que l'unité de détection d'objet (25) a détecté un objet lié à la cible de notification à l'intérieur du véhicule.

6. Dispositif de détection de cible de notification selon la revendication 4 ou 5, comprenant une unité d'obtention de température (26) pour obtenir une température de l'intérieur du véhicule, dans lequel l'unité de détermination de source vocale (24, 24A à 24C) détermine si la source de génération de la voix à l'intérieur du véhicule est la cible de notification lorsque l'unité de détection de cible de notification a détecté la cible de notification dans un état où la vitesse de véhicule dépasse la valeur seuil, qu'il a été déterminé que la vitesse de véhicule est inférieure ou égale à la valeur seuil ou que la position de levier de vitesses est la position de stationnement sur la base des informations de véhicule obtenues par l'unité d'obtention d'informations de véhicule (20), et que la température obtenue par l'unité d'obtention de température (26) est en dehors d'une plage de températures admissible.

7. Système d'alarme comprenant :
un dispositif de détection de cible de notification selon l'une quelconque des revendications 1 à 6 ;
une unité d'alarme pour émettre une alarme vers une zone autour d'un véhicule ; et
une unité de communication pour notifier à un dispositif externe qu'une cible de notification a été laissée seule à l'intérieur d'un véhicule,
dans lequel l'unité d'alarme émet une alarme lorsqu'une unité de détermination de source
vocale (24, 24A à 24C) a déterminé qu'une source de génération d'une voix à l'intérieur du véhicule est uniquement la cible de notification, et
l'unité de communication fournit une notification au dispositif externe en réponse à l'émission de l'alarme par l'unité d'alarme.

8. Procédé de détection de cible de notification comprenant :
l'obtention, par une unité d'obtention d'informations de véhicule (20), d'informations de véhicule indiquant une vitesse de véhicule ou une position de levier de vitesses ;
l'obtention, par une unité d'obtention de vidéo (21), d'une vidéo dans laquelle l'intérieur d'un véhicule est filmé ;
la détermination, par une unité de détermination de présence ou d'absence de passager (22), qu'un passager est présent à l'intérieur du véhicule lorsqu'une image du passager, à l'exception d'un enfant ou d'un animal de compagnie qui sont une cible de notification, dont une personne à l'extérieur d'un véhicule doit être informée, est comprise dans la vidéo à l'intérieur du véhicule obtenue par l'unité d'obtention de vidéo (21) et la détermination que le passager n'est pas présent à l'intérieur du véhicule lorsque l'image du passager qui n'est pas la cible de notification n'est pas comprise dans la vidéo à l'intérieur du véhicule obtenue par l'unité d'obtention de vidéo (21) ;
l'obtention, par une unité d'obtention de voix (23), d'une voix à l'intérieur du véhicule ;
la détermination, par une unité de détermination de source vocale (24, 24A à 24C), si une source de génération de la voix à l'intérieur du véhicule est la cible de notification seule dont la personne à l'extérieur du véhicule doit être informée, sur la base de la voix à l'intérieur du véhicule obtenue par l'unité d'obtention de voix (23) ;
l'obtention, par une unité de détection d'objet (25), d'une détection d'un objet lié à la cible de notification à l'intérieur du véhicule sur la base de la vidéo obtenue par l'unité d'obtention de vidéo (21),
la détermination, par l'unité de détermination de source vocale (24, 24A à 24C), si la source de génération de la voix à l'intérieur du véhicule est la cible de notification seule, lorsqu'il a été déterminé que la vitesse de véhicule est inférieure ou égale à une valeur seuil ou que la position de levier de vitesses est une position de stationnement sur la base des informations de véhicule obtenues par l'unité d'obtention d'informations de véhicule (20), lorsqu'il a été déterminé, par l'unité de détermination de présence ou d'absence de passager (22), qu'un passager n'est pas présent à l'intérieur du véhicule, et lorsqu'un objet lié à la cible de notification à l'intérieur du véhicule a été détecté par l'unité de détection d'objet (25).
